# EUROPEAN PATENT SPECIFICATION

(11) **EP 3 487 755 B1**
(45) Date of publication and mention of the grant of the patent: **21.04.2021**
(21) Application number: 17745475.8
(22) Date of filing: 20.07.2017
(51) Int. Cl.: B62K 19/32, B62H 5/06, B62K 21/04, B62K 21/12, B62K 21/18, B62J 11/13, B62J 11/19

(54) **A HEAD TUBE AND A COMBINATION OF A HEAD TUBE AND A FORK CROWN OR A STEM FOR A CYCLE**
STEUERROHR UND EINE KOMBINATION AUS EINEM STEUERROHR UND EINEM GABELKOPF ODER EINEM VORBAU FÜR EIN FAHRRAD
TUBE DE DIRECTION ET COMBINAISON D'UN TUBE DE DIRECTION ET D'UNE TÊTE DE FOURCHE OU D'UNE POTENCE POUR UN VÉLO

(30) Priority: 22.07.2016 GB 201612756
(43) Date of publication of application: 29.05.2019
(73) Proprietor: Pashley Holdings Limited, Stratford-upon-Avon CV37 9NL (GB)
(72) Inventor: CUMBERPATCH, Jonathan, Stratford-upon-Avon Warwickshire CV37 9NL (GB); BEACH, Jeffrey David, Stratford-upon-Avon Warwickshire CV37 9NL (GB)
(74) Representative: Dempster, Benjamin John Naftel
(86) International application number: PCT/GB2017/052137
(87) International publication number: WO 2018/015760

(56) References cited:
- EP-A1- 2 923 935
- EP-A1- 2 933 177
- WO-A1-2012/168781
- CH-A5- 686 718
- DE-U1- 20 303 468
- US-A1- 2006 022 425
- US-A1- 2010 269 619
- US-B1- 6 378 884
- US-B1- 9 174 695

## Description

The invention relates to a head tube and a combination of a head tube and a fork crown or a stem for a cycle.

Cycles, such as bicycles and tricycles, can include multiple cables, including gear change cables, brake cables and electrical cables which may be for lights or gear changing. Such cables can be damaged, for example by being caught on passing objects, or by vandalism.

US-A-2010/0269619 discloses a head tube according to the preamble of claim 1 and relates to mechanical linkages for controls on bicycles, in particular a handlebar linkage for a "freestyle" bicycle which allows unlimited rotation of the handlebars. EP-A-2923935 and US9174695 relate to a head tube and control cable assemblies for a bicycle in which a pipe surrounds the headset.

EP-A-2933177 relates to an aerodynamic cycle assembly in which a casing is provided around the headset.

WO-A-2012/168781 relates to a bicycle fork with three apertures in a fixing body on a handlebar through which it is possible to insert the brake cables and the gear cables, the fixing body being pivotally connected to the head tube.

According to a first aspect of the invention there is provided a head tube according to claim 1.

In this way, such cables can be concealed over part of their path so that they are protected from damage. It also keeps the cables out of the way of the user, and may improve the aerodynamic performance of the cycle.

At least one second passageway may commence at one end of the head tube. Cables from the handlebars can thus pass straight into the top of the head tube. At least one second passageway may terminate at the side of the head tube where the head tube will intersect with the down tube. In this way, a cable concealed in the head tube can continue to be concealed by passing inside the down tube.

The head tube may be an extrusion. The head tube may be made from any suitable material, but in a preferred embodiment is made from metal, and preferably is made from aluminium alloy.

The plurality of second passageways may be arranged to define a circle, the circle being concentric with the first passageway. The at least one partition may be arranged to extend in a radial direction of the head tube. The head tube may comprise three second passageways.

At least one second passageway of the head tube may have a receiving portion, the receiving portion being configured to receive a solenoid shaft or pin. The receiving portion may define a blind bore.

According to another aspect which is not claimed there is provided a frame for a cycle, the frame including a head tube according to the first aspect of the invention.

According to a further aspect which is not claimed there is provided a cycle including a head tube according to the first aspect of the invention.

It is known to restrict the steering angle of a bicycle or tricycle, in other words the angle through which the handlebars can be turned from limit to limit, by incorporating stops in the headset bearings. In the case of damage, however, for example by forcing the handlebars too far, such as might happen in a crash, the headset has to be taken apart in order to make a repair, if indeed repair is possible. It is desirable to limit the steering angle, because cables from the handlebars to the remainder of the cycle, such as brake cables, gear change cables, and lighting cables, can be wound up, kinked or overstretched if the handlebars are turned too far. Restricting the steering angle also means that front end components such as front carriers, can be prevented from rotating so far that they impact the frame of the cycle.

According to a second aspect of the invention there is provided a combination of a head tube according to the first aspect of the invention and a stem or a fork crown for a cycle, the combination including a replaceable, breakable means to limit the angle of pivoting of the handlebars.

Because the replaceable means is designed to be breakable, the cycle is not damaged if the handlebars are forced too far, for example in a collision or crash, and in that case, the means can simply be replaced. The replaceable means may include a region of weakness at which it will break under stress. The region of weakness may be a region of reduced thickness and may be defined by a groove.

The replaceable means may take any suitable form and may comprise a part on one of the head tube and fork crown or stem, the part being arranged to move between two stops on the other of the head tube and fork crown or stem. The part may take any suitable form and may comprise a pin. The pin may include a region of weakness which may be a groove around the pin. In a preferred embodiment, the part depends from the stem or fork crown and the stops are provided on the head tube. The stem may define a countersunk bore to receive a pin with a shank and an enlarged head. The stops on the head tube may take any suitable form. In one embodiment the stops are defined by the walls of one of said second passageways defined through the head tube.

Embodiments of the invention will now be described by way of example and with reference to the accompanying drawings, in which:
Fig. 1 is a detail, partially exploded perspective view of the head tube, stem and handlebars of a cycle in the first embodiment of the invention;
Fig. 2a is a top plan view of the front of the cycle of the first embodiment with the handlebars turned all the way to the left, and Fig. 2b is the same view with the handlebars turned to the limit to the right;
Fig. 3 is a detail perspective view of the handlebars with frame of a cycle of the first embodiment with the concealed cables and head tube exit aperture shown in phantom;
Fig 4 is the view of Fig. 3 with shrouding in place on the handlebars;
Fig. 5 is a detail side elevation in cross-section of the front of the first embodiment;
Fig. 6 is a side elevation of a pin of the first embodiment;
Figs. 7a, 7b and 7c are cross-sectional views through the head tube of the first embodiment showing pins of the stem and fork in different positions during alignment and assembly;
Fig 8 is an enlarged cross-sectional view of the head tube of the second embodiment.
Fig. 9a is a detail side elevation in cross-section of the front of the second embodiment; and
Fig. 9b is an enlarged view of area 'X' of the solenoid of Fig. 9a.

As shown in the drawings, the embodiment comprises a frame 10 of a bicycle or tricycle and handlebars 12 connected to the frame 10 through a stem 14. The frame 10 comprises a head tube 16 connected to a down tube 18.

The head tube 16 is a tubular profile, which may be made from aluminium alloy, and comprises an inner wall 20 defining a central bore 22, the head tube 16 further comprising an outer wall 24 which is connected to the inner wall 20 by three partitions 26. In alternative embodiments of the invention the outer wall 24 may be connected to the inner wall by more than three partitions. The central bore 22 of the head tube 16 defines a first passageway to receive the headset 30 comprising bearings for the front fork steering tube 13. The partitions 26 divide the space between the inner wall 20 and outer wall 24 into three arcuate, part circular slots 32 which lie in a concentric arrangement around the central bore 22.

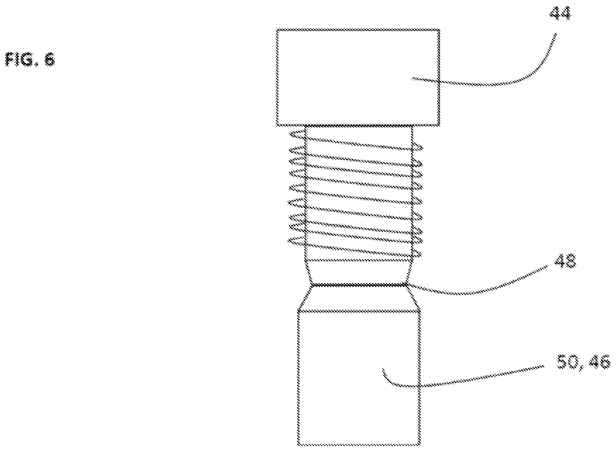

The stem 14 defines a threaded countersunk bore 40 to receive a pin 42. The pin 42 is shown in detail in Fig 6. The bore 40 is offset to one side of the stem 14. The pin 42 has an enlarged head 44 and a slimmer shank 46. The shank 46 is divided in two by a circumferential groove 48 such that, when the pin 42 is received in the countersunk bore 40 of the stem 14, the lower part 50 of the shank of the pin 42 below the groove 48 protrudes from the underside of the stem 14. The upper part of the shank 46 of the pin 42 is threaded and screws into the bore 40.

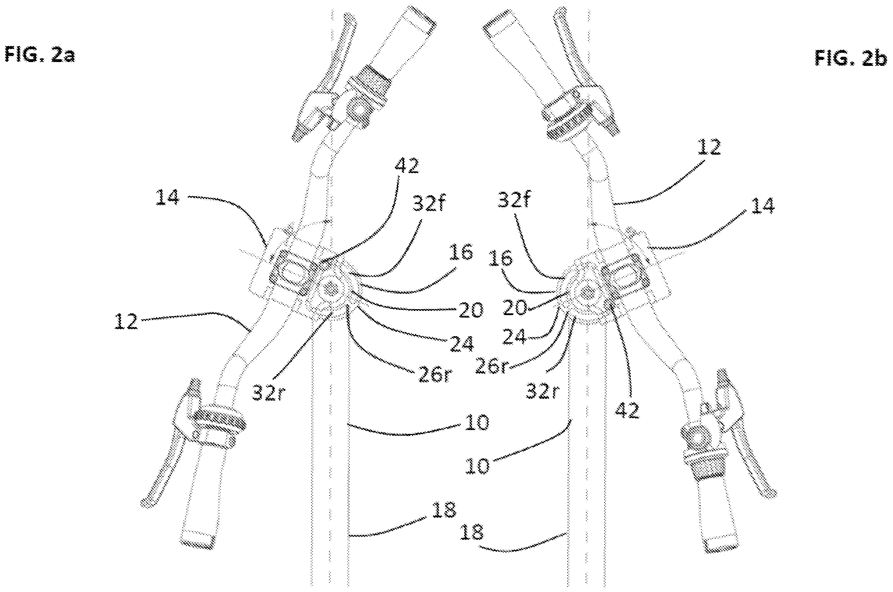

The partitions 26 are arranged so that there is a first partition 26f at the front of the head tube and two partitions 26r at the rear of the head tube such that the rear passageway 32r defined between the two rear partitions 26r is of substantially the same width as the width of the down tube 18, as seen in Figs. 2a and 2b.

There is an aperture 60 in the outer wall 24 which intersects the rear passageway 32r, and also the bore of the down tube 18.

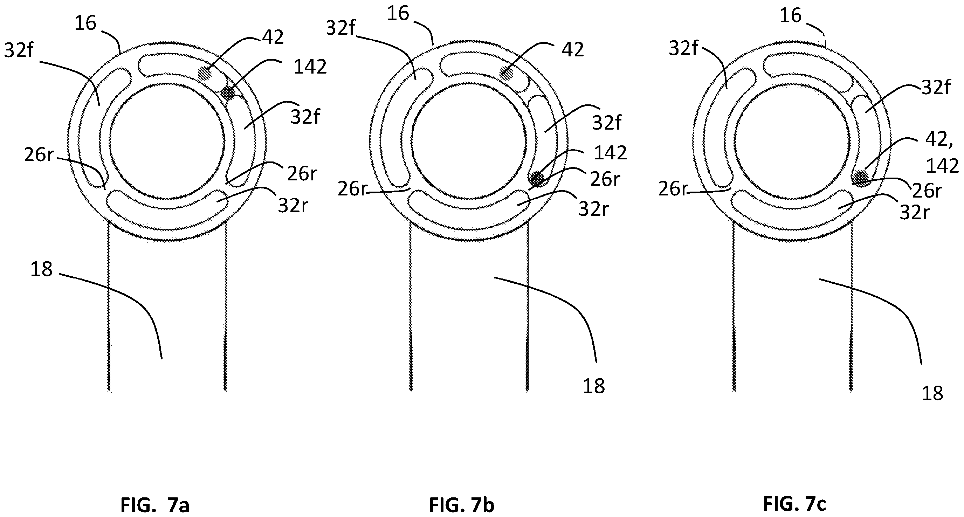

In use, the pin 42 is placed into the countersunk bore 40 and the lower end 50 is received in the right-hand front passageway 32f. In this way, when the handlebars 12 are turned to the left, as shown in Fig. 2a, they will reach a point where they cannot be turned any further when the lower end 50 of the pin 42 hits the front partition 26f which thereby acts as a stop to prevent the handlebars 12 from being turned further. The permitted steering angle may be 65 degrees from the straight ahead position. As the handlebars 12 are turned from this limit position, through the forward position to the right, the pin 42 will eventually engage the right-hand rear partition 26r which thereby acts as a stop to limit further movement of the handlebars 12 to the right. In this way the steering angle is restricted. The pin 42 can also be used for assembly of the cycle, as described in relation to Figs. 7a, 7b and 7c.

If the handlebars 12 should be moved too far too hard, for example if the cycle is in a crash, then the lower end 50 of the pin 42 will snap-off at the weakened region represented by the groove 48. The only part of the bicycle which has been damaged, is thus the pin 42, and that can be lifted out and replaced.

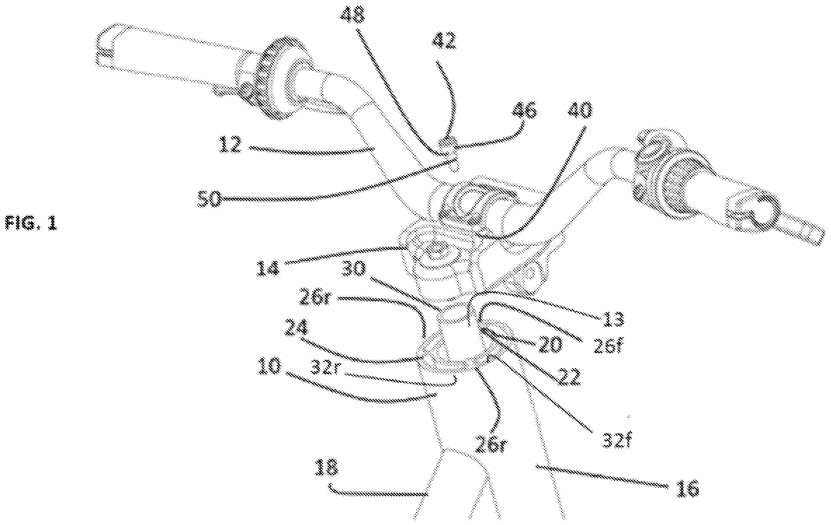

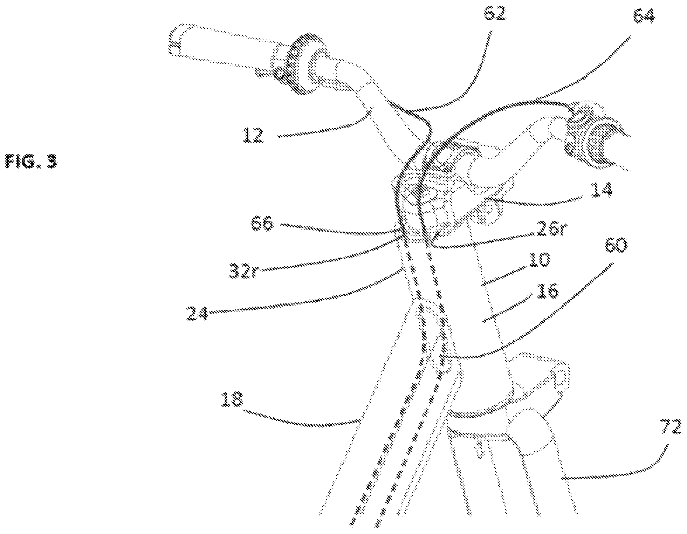

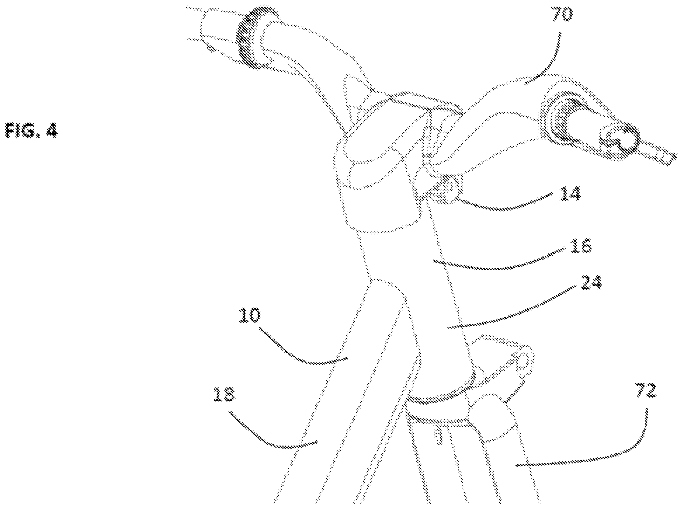

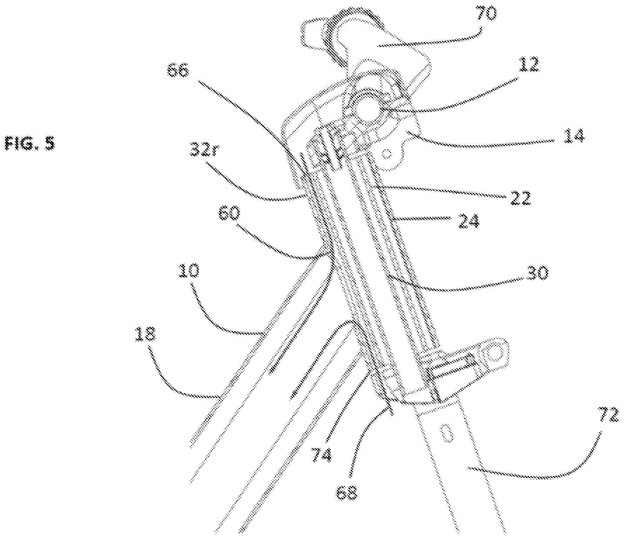

The braking gear cables have been omitted from Figs. 1, 2a, and 2b for clarity. Fig. 3 shows the left-hand brake cable 62 and the right-hand gear cable 64 which are routed from the handlebars 12 down the rear slot 32r of the head tube 16. The cables 62, 64 enter the top 66 of the rear slot 32r and travel down the slot 32r to emerge through the aperture 60 into the interior of the down tube 18. As shown in Fig. 4, shrouding in the form of a cover 70 may be placed over the top of the stem 14 and handlebars 12 to conceal the cables 62, 64. In this way, the cables 62, 64 are entirely concealed at the front of the bicycle. As shown in Fig 5, lighting or brake cables 68 from the front fork 72 can be received in the lower open end 74 of the rear slot 32r of the head tube 16 and also pass through the slot 32r to exit through the aperture 60 into the interior of the down tube 18.

Figs. 7a, 7b and 7c show how the pin 42 on the stem 14 and a fork pin 142 on the front fork 72 can be used to align the head tube 16, front fork 72 and stem 14 during assembly. Fork pin 142 is fixedly attached to the front fork 72. Fork pin 142 may have a simple cylindrical configuration, or may be the same or substantially the same as pin 42 described above in relation to Fig. 6. Front fork 72 has a headset 30.

The head tube 16, front fork 72, and stem 14 can be assembled by:
- inserting the headset 30 of the front fork 72 into the central bore 22 of the head tube 16, such that fork pin 142 is inserted into a lower end of the right-hand front passageway 32f (best seen in Fig. 7a);
- inserting the stem 14 onto the fork steering tube 13, such that pin 42 is inserted into an upper end of the right-hand front passageway 32f of the head tube 16 (best seen in Fig. 7a);
- rotating the front fork 72 about the headset 30 until fork pin 142 is aligned with partition 26r (best seen in Fig. 7b);
- rotating the stem 14 about the fork steering tube 13 until pin 42 is aligned with partition 26r (best seen in Fig. 7c);
- securing the front fork 72 and the stem 14 relative to each other in this aligned position.

By using pin 42, fork pin 142 and the arrangement of passageways described above and shown in Figures 7a to 7c, a simple and reliable alignment and assembly process is provided.

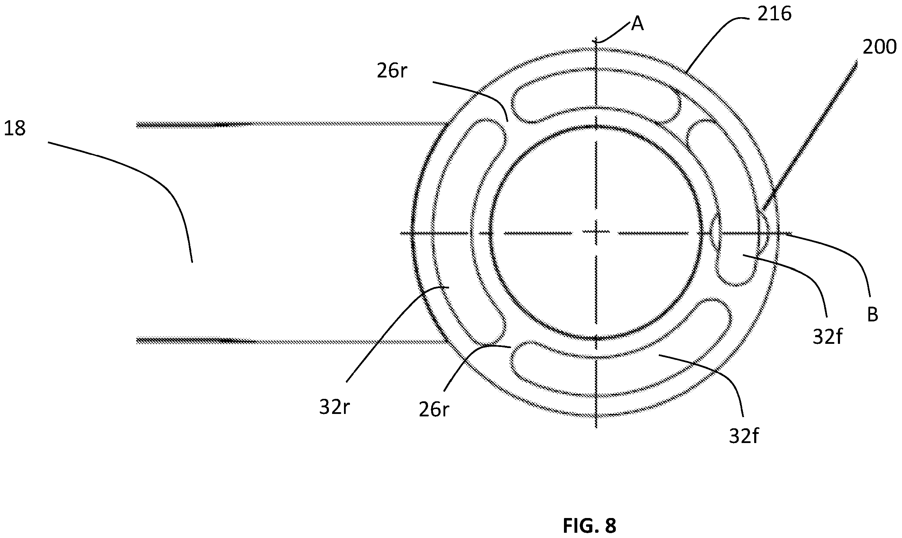

As shown in Fig. 8, the head tube 216 of the second embodiment is substantially the same as the first embodiment head tube 16. Reference numerals identical to those used for the first embodiment have been used to describe the second embodiment, where features of the second embodiment correspond to, or are the same as, features of the first embodiment.

The second embodiment head tube 216 differs from the first embodiment head tube 16 in that it comprises a receiving portion 200, the receiving portion 200 defining a blind bore. The receiving portion 200 is configured such that it has a diameter, the diameter being larger than a radial width of the front passageway 32f in which the receiving portion 200 is integrated, as shown in Fig. 8.

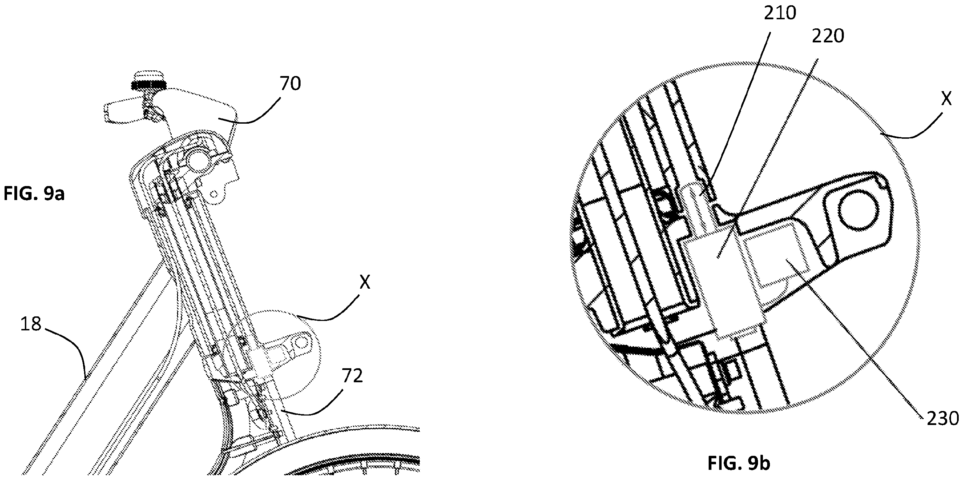

The receiving portion 200 is configured to receive and support a solenoid or a pin of a solenoid, as best seen in Figs. 9a and 9b. As best seen in area 'X' of Fig. 9a, an enlarged section of which is shown in Fig. 9b, there is provided a solenoid assembly having a solenoid body 220, solenoid pin 210 and solenoid power unit 230. Solenoid body 220 and solenoid power unit 230 are fixedly attached to the front fork 72. Solenoid pin 210 is arranged so that it can be moved into or out of the blind bore defined by the receiving portion 200. Actuation of the solenoid pin 210 into an extended or retracted position is controlled by the solenoid body 220 and solenoid control unit 230.

When the solenoid pin 210 is in a retracted position, the front fork 72 (and attached front wheel) and handlebars 12 are free to move, for example between the positions shown in Figs. 2a and 2b. When the solenoid pin 210 is in an extended position, the front fork 72 (and attached front wheel) and handlebars 12 are fixed and cannot rotate between the positions shown in Figs. 2a and 2b. In this state, the steering of the cycle is effectively immobilised, rendering the cycle unusable. This feature provides a concealed steering locking mechanism, which compared to an exposed locking mechanism has the advantage of restricting potential tampering or vandalism. Such a feature has various advantages related to security of the cycle, and has further advantages when, for example, applied in a "dockless" cycle share scheme.

It will be understood by a person skilled in the art that although a solenoid assembly has been described, any form of actuatable mechanism of a suitable configuration to be installed into the cycle in a concealed manner, suitable for locking the handlebars relative to the frame could be used.

## Claims

1. A head tube for a cycle, the head tube being a tubular profile and comprising an inner wall (20) defining a central bore (22), the central bore forming a first passageway (22) to receive a headset comprising bearings for a front fork steering tube (13) of the cycle, the head tube further comprising an outer wall (24), **characterised in that** the outer wall defines a plurality of arcuate slots (32) concentric to the central bore (22), each arcuate slot (32) forming a second passageway to receive a cable such as a brake cable, gear change cable, or electrical cable or the like, the head tube further comprising at least one partition (26) connecting the inner wall to the outer wall and disposed between two neighbouring ones of said second passageways (32).

2. A head tube as claimed in claim 1, wherein at least one of said second passageways (32) commences at one end of the head tube.

3. A head tube as claimed in claim 1 or claim 2, wherein at least one of said second passageways (32) terminates in an opening (60) at the side of the head tube where the head tube is arranged to intersect with a down tube of the cycle.

4. A head tube as claimed in claim 1, 2 or 3, wherein the head tube is an extrusion.

5. A head tube as claimed in any preceding claim, wherein the head tube is made from metal, optionally wherein the head tube is made from aluminium or aluminium alloy.

6. A head tube as claimed in any preceding claim, wherein the plurality of second passageways (32) are arranged to define a circle, the circle being concentric with the first passageway (22).

7. A head tube as claimed in claim 6, wherein the at least one partition (26) is arranged to extend in a radial direction of the head tube.

8. A head tube as claimed in any preceding claim, comprising three of said second passageways (32).

9. A head tube as claimed in any preceding claim, wherein at least one of said second passageways (32f) has a receiving portion (200), the receiving portion (200) being configured to receive a solenoid shaft or pin.

10. A head tube as claimed in claim 9, wherein the receiving portion (200) defines a blind bore.

11. A combination of a head tube as claimed in any preceding claim and a fork crown or a stem for a cycle, the combination including a replaceable, breakable means (42) to limit the angle of pivoting of handlebars of the cycle.

12. A combination as claimed in claim 11, wherein the replaceable means (42) includes a region of weakness at which it is arranged to break under stress, wherein the region of weakness may be a region of reduced thickness, optionally wherein the region of weakness is defined by a groove (48).

13. A combination as claimed in claim 11 or claim 12, wherein the replaceable means (42) comprises a part on one of the head tube and stem or fork crown, the part being arranged to move between two stops on the other of the head tube and stem or fork crown.

14. A combination as claimed in claim 13, wherein the part comprises a pin (42).

15. A combination as claimed in claim 13 or 14, wherein the part (42) depends from the stem or fork crown and the stops are provided on the head tube.

16. A combination as claimed in claim 15, wherein the stops are defined by the walls (26) of one of said second passageways (32) defined through the head tube.

## Patentansprüche

1. Steuerrohr für ein Fahrrad, wobei das Steuerrohr ein rohrförmiges Profil hat und eine Innenwand (20) aufweist, die ein zentrales Loch (22) definiert, das zentrale Loch einen ersten Durchlass (22) bildet, um einen Steuersatz aufzunehmen, der Lager für ein Vordergabel-Lenkerrohr (13) des Fahrrads aufweist, das Steuerrohr ferner eine Außenwand (24) aufweist, **dadurch gekennzeichnet, dass** die Außenwand eine Mehrzahl von bogenförmigen Schlitzen (32) definiert, die konzentrisch zum zentralen Loch (22) sind, jeder bogenförmige Schlitz (32) einen zweiten Durchlass bildet, um ein Kabel, wie einen Bremszug, ein Gangschaltkabel oder ein elektrisches Kabel oder dergleichen, aufzunehmen, wobei das Steuerrohr ferner wenigstens eine Trennwand (26) aufweist, welche die Innenwand mit der Außenwand verbindet und zwischen zwei benachbarten der zweiten Durchlässe (32) angeordnet ist.

2. Steuerrohr nach Anspruch 1, wobei wenigstens einer der besagten zweiten Durchlässe (32) an einem Ende des Steuerrohres beginnt.

3. Steuerrohr nach Anspruch 1 oder Anspruch 2, wobei wenigstens einer der besagten zweiten Durchlässe (32) in einer Öffnung (60) auf der Seite des Steuerrohres endet, wo das Steuerrohr angeordnet ist, um mit einem Unterrohr des Fahrrads zusammenzulaufen.

4. Steuerrohr nach Anspruch 1, 2 oder 3, wobei das Steuerrohr ein Strangpressteil ist.

5. Steuerrohr nach einem der vorhergehenden Ansprüche, wobei das Steuerrohr aus Metall gefertigt ist, optional, wobei das Steuerrohr aus Aluminium oder einer Aluminiumlegierung gefertigt ist.

6. Steuerrohr nach einem der vorhergehenden Ansprüche, wobei die Mehrzahl der zweiten Durchlässe (32) angeordnet ist, um einen Kreis zu definieren, wobei der Kreis konzentrisch zum ersten Durchlass (22) ist.

7. Steuerrohr nach Anspruch 6, wobei die wenigstens eine Trennwand (26) angeordnet ist, um sich in radialer Richtung des Steuerrohres zu erstrecken.

8. Steuerrohr nach einem der vorhergehenden Ansprüche, aufweisend drei besagter zweiter Durchlässe (32).

9. Steuerrohr nach einem der vorhergehenden Ansprüche, wobei wenigstens einer der besagten zweiten Durchlässe (32f) einen Aufnahmebereich (200) hat, wobei der Aufnahmebereich (200) ausgebildet ist, um einen Magnetanker oder -stift aufzunehmen.

10. Steuerrohr nach Anspruch 9, wobei der Aufnahmebereich (200) ein Sackloch definiert.

11. Kombination eines Steuerrohres, wie in einem der vorhergehenden Ansprüche definiert, und einem Gabelkopf oder einem Vorbau für ein Fahrrad, wobei die Kombination ein austauschbares, zerbrechliches Mittel (42) aufweist, um einen Schwenkwinkel des Fahrradlenkers zu begrenzen.

12. Kombination nach Anspruch 11, wobei das austauschbare Mittel (42) einen Schwachstellenbereich umfasst, in dem vorgesehen ist, dass es unter Spannung bricht, wobei der Schwachstellenbereich ein Bereich verringerter Dicke sein kann, wobei der Schwachstellenbereich beispielsweise durch eine Nut (48) definiert ist.

13. Kombination nach Anspruch 11 oder Anspruch 12, wobei das austauschbare Mittel (42) einen Teil am Steuerrohr bzw. Vorbau oder Gabelkopf aufweist, wobei das Teil angeordnet ist, um sich zwischen zwei Anschlägen am anderen von Steuerrohr bzw. Vorbau oder Gabelkopf zu bewegen.

14. Kombination nach Anspruch 13, wobei das Teil einen Stift (42) aufweist.

15. Kombination nach Anspruch 13 oder 14, wobei das Teil (42) vom Vorbau oder Gabelkopf abhängt und die Anschläge am Steuerrohr vorgesehen sind.

16. Kombination nach Anspruch 15, wobei die Anschläge durch Wände (26) von einem der besagten zweiten, durch das Steuerrohr definierten Durchlässe (32) definiert sind.

## Revendications

1. Tube de direction de vélo, ce tube ayant un profil tubulaire et une paroi intérieure (20) formant un trou central (22), le trou central constituant un premier passage (22) pour recevoir un jeu de direction comprenant des paliers pour le tube de fourche (13) du vélo, le tube de direction ayant une paroi extérieure (24),
tube de direction **caractérisé en ce que**
la paroi extérieure forme un ensemble de fentes arquées (32) concentriques au trou central (22), chaque fente arquée (32) formant un second passage pour recevoir un câble tel qu'un câble de frein, un câble de dérailleur ou un câble électrique ou analogue, le tube de direction ayant en outre au moins une cloison (26) reliant la paroi intérieure à la paroi extérieure, cette cloison étant entre deux seconds passages (32) voisins.

2. Tube de direction selon la revendication 1,
dans lequel
au moins l'un des seconds passages (32) commence à une extrémité du tube de direction.

3. Tube de direction selon la revendication 1 ou 2,
dans lequel
au moins l'un des seconds passages (32) se termine par un orifice (60) sur le côté du tube de direction là où le tube de direction coupe le tube oblique du cadre du vélo.

4. Tube de direction selon les revendications 1, 2 ou 3,
dans lequel
le tube est extrudé.

5. Tube de direction selon l'une quelconque des revendications précédentes,
dans lequel
le tube de direction est en métal, en option le tube de direction est en aluminium ou en un alliage d'aluminium.

6. Tube de direction selon l'une quelconque des revendications précédentes,
dans lequel
l'ensemble des seconds passages (32) est aligné pour former un cercle, concentrique au premier passage (22).

7. Tube de direction selon la revendication 6,
dans lequel
au moins une cloison (26) s'étend dans la direction radiale du tube de direction.

8. Tube de direction selon l'une quelconque des revendications précédentes,
comprenant trois seconds passages (32).

9. Tube de direction selon l'une quelconque des revendications précédentes,
dans lequel
au moins l'un des seconds passages (32f) a une partie de réception (200), configurée pour recevoir un axe de solénoïde ou une broche.

10. Tube de direction selon la revendication 9,
dans lequel
la partie de réception (200) forme un trou borgne.

11. Combinaison d'un tube de direction selon l'une quelconque des revendications précédentes et une potence ou tube de vélo, la combinaison comprenant des moyens remplaçables (42) susceptibles de se casser pour limiter l'angle de pivotement du guidon du vélo.

12. Combinaison selon la revendication 11,
dans laquelle
les moyens remplaçables (42) comprennent une région affaiblie conçue pour se casser sous contrainte,
la région affaiblie étant une région d'épaisseur réduite, en option la région affaiblie est définie par une gorge (48).

13. Combinaison selon la revendication 11 ou la revendication 12, dans lequel
le moyen remplaçable (42) comprend une pièce du tube de direction ou de la tige ou de la potence de fourche, cette pièce étant montée pour bouger entre deux butées sur l'autre tube de direction ou tige ou potence.

14. Combinaison selon la revendication 13,
dans lequel
la pièce comporte une broche (42).

15. Combinaison selon la revendication 13 ou 14,
dans laquelle
la pièce (42) vient de la tige ou de la potence et les butées sont prévues sur le tube de direction.

16. Combinaison selon la revendication 15,
dans laquelle
les butées sont définies par les parois (26) de l'un des seconds passages (32) traversant le tube de direction.
